# FASCICULE DE BREVET EUROPEEN

(11) **EP 1 950 523 B1**
(45) Date de publication et mention de la délivrance du brevet: **25.11.2009**
(21) Numéro de dépôt: 08290049.9
(22) Date de dépôt: 21.01.2008
(51) Int. Cl.: F42B 10/66, F02K 9/84

(54) **Système de tuyères pour le contrôle de la trajectoire d'un mobile**
Düsensystem zur Kontrolle der Bahn eines beweglichen Objekts
System of nozzles for controlling the trajectory of a moving body

(30) Priorité: 24.01.2007 FR 0700472
(43) Date de publication de la demande: 30.07.2008
(73) Titulaire: MBDA France, 75016 Paris (FR)
(72) Inventeur: Carton, Laurent, 18400 St Florent sur Cher (FR); Tisseron, Bernard, 58180 Marzy (FR)
(74) Mandataire: Bonnetat, Christian

(56) Documents cités:
- CH-A- 383 694
- FR-A- 1 246 339
- GB-A- 938 940
- US-A- 3 200 586
- US-A- 3 273 801

## Description

La présente invention a pour objet un système de tuyères pour le contrôle de la trajectoire d'un mobile, tel qu'un missile, une torpille, un satellite, etc ... Quoique non exclusivement, elle est particulièrement appropriée au guidage de missiles pourvus d'un accélérateur de poussée, lors de la phase de lancement desdits missiles.

On sait que, pour les mobiles mus par réaction, il est usuel de contrôler la trajectoire desdits mobiles par orientation de la poussée. On sait de plus que le guidage d'un tel mobile doit pouvoir être réalisé dans les quatre sens de deux directions orthogonales (vers le haut, vers le bas, vers la droite et vers la gauche), de sorte que l'on prévoit généralement des systèmes d'articulations complexes pour les tuyères, comme par exemple des rotules étanches ou des paliers élastiques déformables, et de nombreux actionneurs pour orienter lesdites tuyères (généralement deux actionneurs par tuyère).

La complexité de tels systèmes d'articulation est encore augmentée du fait que, étant soumis à un échauffement important par les gaz de propulsion, ils doivent être aptes à résister aux températures élevées.

Cependant, dans le brevet FR-1 246 339, est décrit un système pour le contrôle de la trajectoire d'un missile, comportant trois tuyères disposées aux sommets d'un triangle équilatéral autour de l'axe longitudinal dudit missile. Dans ce système connu, le pavillon divergent de chaque tuyère est incliné par rapport au col de tuyère correspondant et chaque col de tuyère est monté en rotation par rapport audit missile à la manière d'un arbre dans un palier cylindrique, autour d'un axe parallèle audit axe longitudinal.

On évite ainsi les systèmes d'articulation compliqués, d'autant plus que lesdits paliers ne sont pas au contact direct des flux chauds traversant les tuyères et travaillent donc dans des conditions de température moins élevées. De plus, l'étanchéité d'un palier cylindrique est aisée à réaliser et un seul actionneur peut être utilisé pour faire tourner chaque tuyère.

Le système du brevet FR-1 246 339 présente donc des avantages certains par rapport au reste de la technique antérieure. Toutefois, il présente l'inconvénient de nécessiter trois tuyères.

La présente invention a pour objet de remédier à cet inconvénient en perfectionnant le système du brevet FR-1 246 339.

A cette fin, selon l'invention, Le système de tuyères pour le contrôle de la trajectoire d'un mobile mû par réaction et présentant un axe longitudinal à l'intersection du plan longitudinal médian horizontal et du plan longitudinal médian vertical dudit mobile, système dans lequel :
- chacune desdites tuyères comporte un col prolongé par un pavillon divergent, le col de chaque tuyère présentant un axe de col parallèle audit axe longitudinal du mobile et étant monté rotatif, par rapport audit mobile, autour dudit axe de col, alors que le pavillon de chaque tuyère présente un axe de pavillon incliné d'un angle prédéterminé fixe par rapport audit axe de col correspondant, l'axe de col et l'axe de pavillon d'une tuyère formant un plan de symétrie pour celle-ci ;
- à chaque tuyère est associé un actionneur apte à faire tourner ladite tuyère autour de l'axe de col correspondant ; et
- des moyens sont prévus pour commander l'orientation desdites tuyères sous l'action desdits actionneurs,
   est remarquable en ce que :
- ledit système comporte une unique paire de tuyères diamétralement opposées par rapport audit axe longitudinal du mobile, les axes des cols des deux tuyères étant disposés dans ledit plan longitudinal médian horizontal du mobile ;
- lorsque ledit mobile est en croisière, ledit plan longitudinal médian horizontal est disposé horizontalement et les plans de symétrie des deux tuyères sont confondus avec ledit plan longitudinal médian horizontal, les tuyères étant dirigées en sens opposés ; et
- à partir de cette configuration de croisière, une déviation dudit missile dans une direction transversale audit axe longitudinal est obtenue :
   ■ par une rotation en roulis préalable autour dudit axe longitudinal amenant ledit plan longitudinal médian horizontal du mobile dans une position au moins sensiblement orthogonale à ladite direction transversale, puis
   ■ par une déflexion résultant d'une orientation symétrique des plans de symétrie des deux tuyères par rapport audit plan longitudinal médian vertical dudit mobile, lesdites tuyères étant dirigées en commun dans le sens opposé à ladite déviation.

Ainsi, grâce à la présente invention, le système de tuyères peut ne mettre en oeuvre que deux tuyères, ce qui permet de réaliser des économies de masse, d'encombrement et de coûts.

Bien entendu, l'amplitude de ladite déflexion est d'autant plus importante que les composantes des poussées des deux tuyères, parallèlement à ladite direction transversale, sont plus grandes. Aussi, dans la déflexion suivant la rotation en roulis, il est avantageux d'amener les plans de symétrie des deux tuyères parallèlement au plan longitudinal médian vertical du mobile.

Le col de chaque tuyère peut comporter un anneau transversal périphériquement saillant et être monté dans un palier, qui est solidaire dudit mobile et qui comporte des moyens de roulement pressant ledit anneau entre eux. On obtient ainsi un montage, à la fois mécaniquement résistant et particulièrement apte à la rotation.

Avantageusement, le pavillon de chaque tuyère est rapporté au col correspondant en le recouvrant au moins en partie et il porte une couronne périphérique externe coopérant avec l'actionneur correspondant. Celui-ci peut être du type à vis sans fin.

Les figures du dessin annexé feront bien comprendre comment l'invention peut être réalisée. Sur ces figures, des références identiques désignent des éléments semblables.

La figure 1 montre, en coupe axiale selon le plan de coupe I-I de la figure 2, la partie postérieure d'un missile équipé du système de tuyères conforme à la présente invention.

La figure 2 est une vue en perspective de l'arrière de la partie postérieure de missile montrée par la figure 1.

La figure 3 est une vue en coupe agrandie d'une tuyère pour le système de tuyères des figures 1 et 2, la coupe correspondant au plan de symétrie de ladite tuyère.

Les figures 4 à 8 illustrent schématiquement plusieurs configurations possibles pour le système de tuyères des figures 1 et 2.

Les figures 9A à 9D illustrent schématiquement la réalisation d'un virage du missile équipé du système de tuyères des figures 1 et 2.

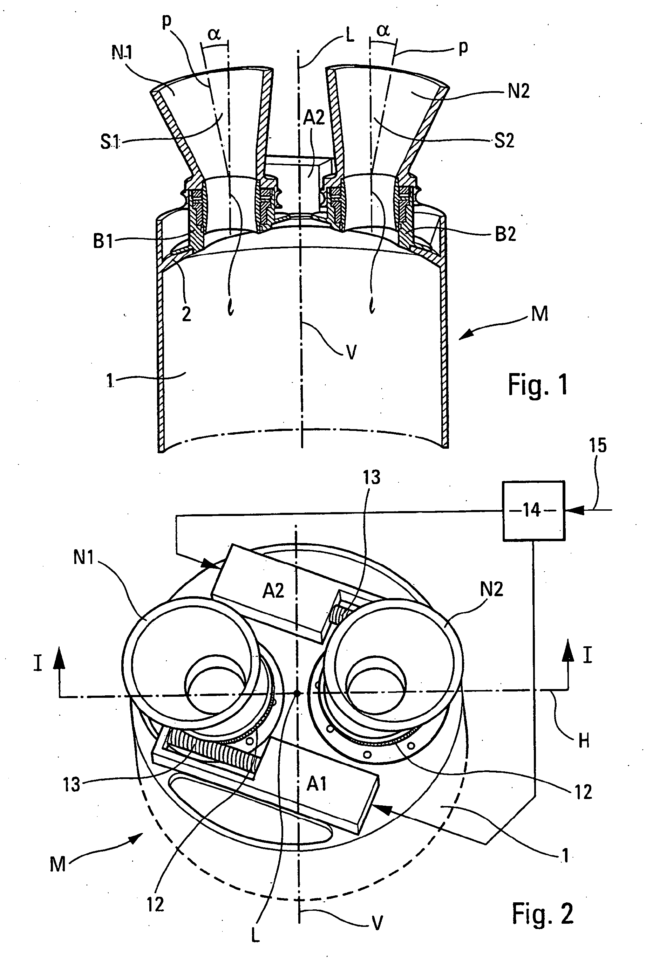

La partie postérieure 1 du missile M, représentée par les figures 1 et 2, comporte deux tuyères N1 et N2 destinées à propulser ledit missile par réaction et montées sur le fond 2 de ladite partie postérieure 1. Celle-ci présente un plan longitudinal médian horizontal H (avec lequel est confondu le plan de coupe I-I) et un plan longitudinal médian vertical V, lesdits plans longitudinaux se coupant orthogonalement pour définir l'axe longitudinal L dudit missile M.

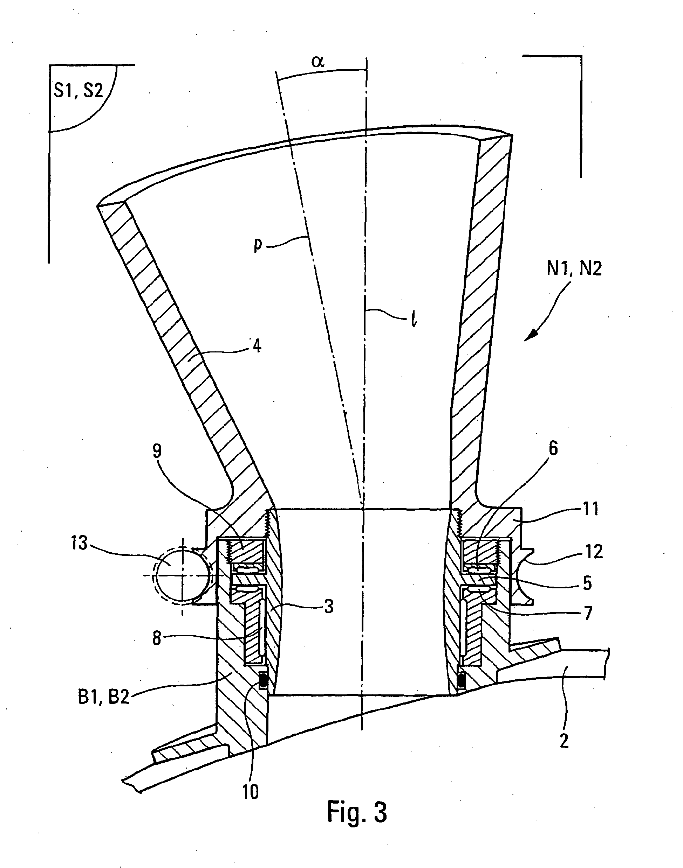

Comme le montre à plus grande échelle la figure 3, chaque tuyère N1, N2 comporte un col 3 prolongé par un pavillon divergent 4. L'axe ℓ du col 3 de chaque tuyère N1, N2 est parallèle à l'axe longitudinal L du missile M (voir la figure 1) et est disposé dans le plan longitudinal médian horizontal H. Chaque col 3 est monté rotatif autour de son axe ℓ par rapport audit fond 2, d'une manière qui sera expliquée ci-après plus en détail. L'axe p du pavillon 4 de chaque tuyère N1, N2 est incliné d'un angle prédéterminé fixe α, par exemple égal à 10°, par rapport à l'axe ℓ du col correspondant, de sorte que l'axe ℓ et l'axe p de chaque tuyère N1, N2 définissent un plan de symétrie S1 ou S2, respectivement, pour la tuyère.

Chaque tuyère N1, N2 est donc montée rotative par rapport au fond 2, autour de l'axe ℓ du col 3 correspondant. A cette fin, des paliers B1 et B2, solidaires dudit fond 2 reçoivent le col 3 des tuyères N1 ou N2, respectivement.

Chaque col 3 comporte un anneau transversal périphérique saillant et chaque palier B1 et B2 comporte des roulements à aiguilles 6 et 7 pressant l'anneau correspondant entre eux. Un roulement à aiguilles supplémentaire 8 guide et supporte la rotation de la tuyère N1, N2 autour dudit axe ℓ. Un écrou de blocage 9 permet de bloquer les roulements 6, 7 et 8 par rapport au palier B1, B2 et au col 3. Un joint 10 assure l'étanchéité entre le palier B1, B2 et le col 3 correspondant.

Le pavillon 4 de chaque tuyère N1, N2 est rapporté par vissage sur le col 3 correspondant et comporte un rebord 11 recouvrant extérieurement la partie du palier B1, B2 opposée au fond 2. Le rebord 11 porte une couronne périphérique externe 12, servant à l'entraînement en rotation de la tuyère N1, N2 autour de l'axe correspondant.

Sur la face extérieure du fond 2 sont montés deux actionneurs A1 et A2, pourvus chacun d'une vis sans fin 13 respectivement en prise avec la couronne périphérique externe 12 (filetée de façon appropriée) de la tuyère N1 ou N2 (voir la figure 2). Les actionneurs A1 et A2 sont commandés par un dispositif 14 recevant des ordres de pilotage 15.

Ainsi, chaque tuyère N1, N2 peut tourner autour de l'axe ℓ de son col 3 sous l'action de l'actionneur A1, A2 associé.

Sur la figure 3, à des fins de clarté, on a représenté la prise de la vis sans fin 13 avec la couronne 12 correspondante. On notera cependant que, en toute rigueur, cette vis sans fin 13 n'est pas visible sur la figure 3 si l'on se reporte à la figure 2.

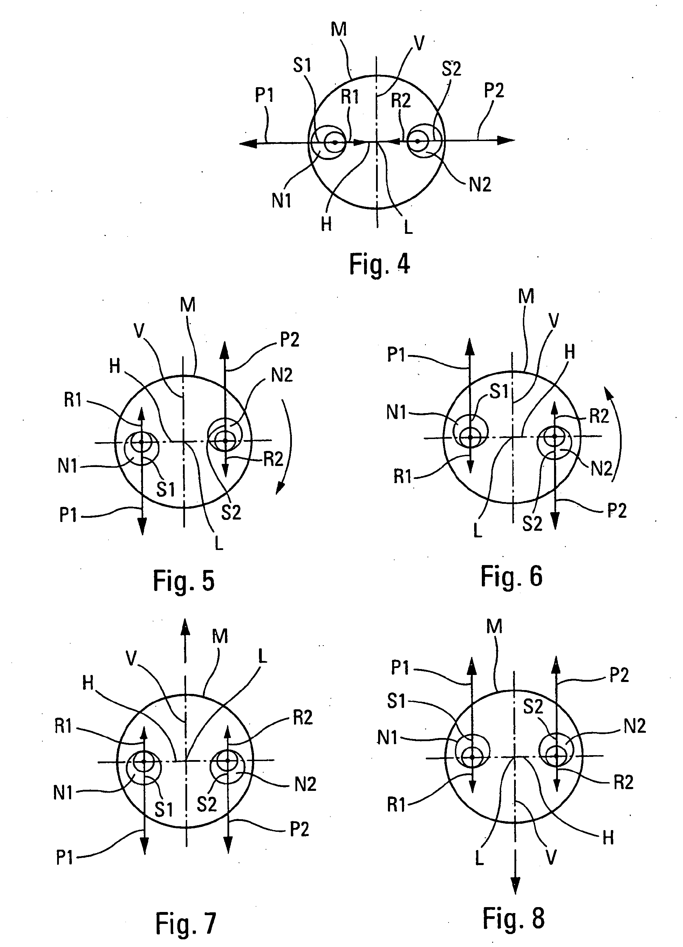

Le fonctionnement du système des tuyères N1, N2, conforme à la présente invention, est expliqué ci-après en regard des figures 4 à 8 et 9A à 9D qui représentent schématiquement le missile M vu de l'arrière et sur lesquelles les poussées correspondant aux tuyères N1 et N2 sont symbolisées par des flèches P1 et P2, respectivement, alors que les réactions de ces poussées sur le missile M y sont respectivement symbolisées par des flèches R1 et R2.

Au lancement du missile M et en vol de croisière (voir la figure 4), le plan longitudinal médian horizontal H est disposé horizontalement et les plans de symétrie S1 et S2 des tuyères N1 et N2 sont confondus avec ledit plan longitudinal médian horizontal H, les tuyères N1 et N2 étant dirigées en sens opposées. Il en résulte que les poussées P1 et P2 sont elles-mêmes opposées, ainsi que les réactions R1 et R2. Le missile est donc en vol horizontal stabilisé.

Si les ordres de pilotage 15 correspondent à un roulis autour de l'axe longitudinal L, les actionneurs A1 et A2 amènent les plans de symétrie S1 et S2 des tuyères N1 et N2 parallèles l'un à l'autre (et de préférence également parallèles au plan longitudinal médian vertical V, comme représenté sur les figures 5 et 6), avec les tuyères N1 et N2 dirigées en sens opposés. Les poussées P1 et P2, ainsi que les réactions R1 et R2, sont donc elles-mêmes opposées et il en résulte l'apparition d'un couple faisant tourner le missile M autour de l'axe longitudinal L. Suivant l'orientation respective des tuyères N1 et N2, ledit missile M tourne dans le sens des aiguilles d'une montre (figure 5) ou dans le sens inverse (figure 6).

Si, à partir de la position de vol stabilisé de la figure 4, les ordres de pilotage 15 correspondent à une montée (figure 7) ou à une descente (figure 8), les actionneurs A1 et A2 amènent les plans de symétrie S1 et S2 des tuyères N1 et N2 en positions symétriques par rapport au plan longitudinal médian vertical V (lesdits plans de symétrie S1 et S2 sont alors de préférence amenés parallèlement audit plan longitudinal médian vertical V), avec les tuyères N1 et N2 orientées dans le même sens. Suivant le sens commun de l'orientation desdites tuyères N1 et N2, les réactions R1 et R2 font monter (figure 7) ou descendre (figure 8) ledit missile M.

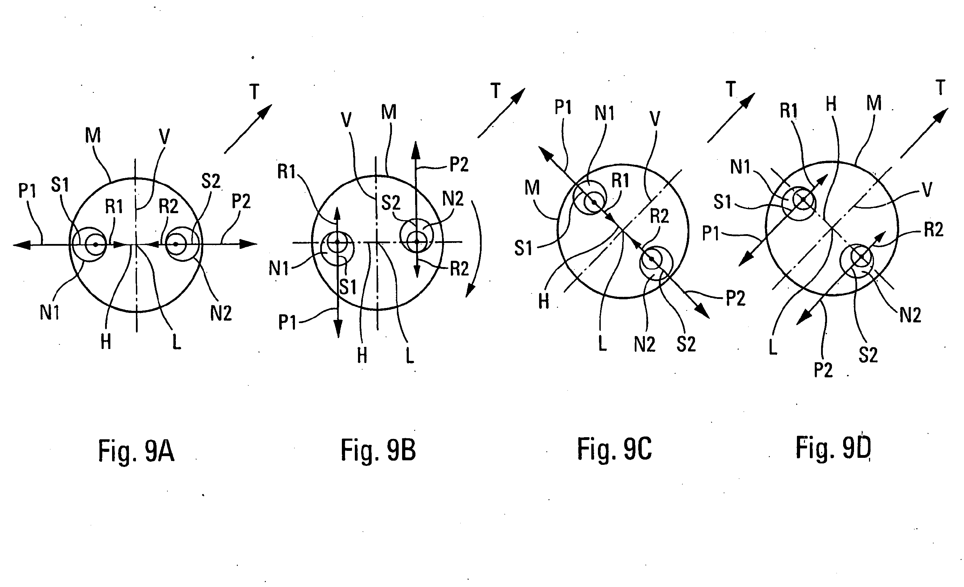

Sur les figures 9A à 9D, on a illustré quatre étapes du fonctionnement des tuyères N1 et N2 amenant le missile M à effectuer un virage dans une direction T transversale à sa trajectoire.

La figure 9A, semblable à la figure 4, représente le missile M en vol horizontal stabilisé. A partir de cette attitude, les ordres 1 5 commandent le roulis du missile M en direction de la direction T, de façon identique à ce qui a été expliqué en regard des figures 5 ou 6 (voir la figure 9B). Le missile M tourne alors autour de l'axe longitudinal L jusqu'à ce que son plan longitudinal médian horizontal H soit orthogonal à la direction transversale T (figure 9C). Dans cette position inclinée en roulis, le vol peut éventuellement être stabilisé horizontalement par opposition des poussées P1 et P2, de façon identique à la situation des figures 4 et 9A. A partir de la position, éventuellement stabilisée, pour laquelle le plan horizontal médian horizontal H est orthogonal à la direction transversale, le missile M est déplacé dans la direction T, par une manoeuvre identique à celle décrite en regard des figures 7 ou 8 (voir la figure 9D), c'est-à-dire en amenant les plans de symétrie S1 et S2 des tuyères N1 et N2 en positions symétriques, et de préférence parallèles, par rapport au plan longitudinal médian vertical V, avec lesdites tuyères orientées en commun en sens inverse de la déflexion symbolisée par la flèche T.

Ainsi, selon l'invention, le virage est réalisé par une rotation en roulis suivie d'une déflexion.

## Revendications

1. Système de tuyères pour le contrôle de la trajectoire d'un mobile (M) mû par réaction et présentant un axe longitudinal (L) à l'intersection du plan longitudinal médian horizontal (H) et du plan longitudinal médian-vertical (V) dudit mobile, système dans lequel :
- chacune desdites tuyères comporte un col (3) prolongé par un pavillon divergent (4), le col de chaque tuyère présentant un axe de col (ℓ) parallèle audit axe longitudinal du mobile et étant monté rotatif, par rapport audit mobile, autour dudit axe de col, alors que le pavillon (4) de chaque tuyère présente un axe de pavillon (p) incliné d'un angle prédéterminé fixe (α) par rapport audit axe de col correspondant, l'axe de col et l'axe de pavillon d'une tuyère formant un plan de symétrie pour celle-ci ;
- à chaque tuyère est associé un actionneur apte à faire tourner ladite tuyère autour de l'axe de col correspondant ; et
- des moyens (14) sont prévus pour commander l'orientation desdites tuyères sous l'action desdits actionneurs,
**caractérisé** :
- ledit système comporte une unique paire de tuyères (N1, N2) diamétralement opposées par rapport audit axe longitudinal (L) du mobile (M), les axes (ℓ) des cols des deux tuyères étant disposés dans ledit plan longitudinal médian horizontal (H) du mobile ;
- lorsque ledit mobile est en croisière, ledit plan longitudinal médian horizontal (H) est disposé horizontalement et les plans de symétrie (S1, S2) des deux tuyères (N1, N2) sont confondus avec ledit plan longitudinal médian horizontal (H), les tuyères étant dirigées en sens opposés ; et
- à partir de cette configuration de croisière, une déviation dudit missile dans une direction (T) transversale audit axe longitudinal (L) est obtenue :
■ par une rotation en roulis préalable autour dudit axe longitudinal (L) amenant ledit plan longitudinal médian horizontal (H) du mobile (M) dans une position au moins sensiblement orthogonale à ladite direction transversale (T), puis
■ par une déflexion résultant d'une orientation symétrique des plans de symétrie (S1, S2) des deux tuyères par rapport audit plan longitudinal médian vertical (V) dudit mobile (M), lesdites tuyères étant dirigées en commun dans le sens opposé à ladite déviation.

2. Système selon la revendication 1,
**caractérisé en ce que**, dans ladite déflexion suivant la rotation en roulis, les plans de symétrie (S1, S2) des deux tuyères sont parallèles audit plan longitudinal médian vertical (V) dudit mobile.

3. Système selon l'une des revendications 1 ou 2,
**caractérisé en ce que** le col (3) de chaque tuyère (N1, N2) comporte un anneau transversal périphériquement saillant (5) et est monté dans un palier (B1, B2), qui est solidaire dudit mobile (M) et qui comporte des moyens de roulement (6, 7) pressant ledit anneau (5) entre eux.

4. Système selon l'une des revendications 1 à 3,
**caractérisé en ce que** le pavillon (4) de chaque tuyère (N1, N2) est rapporté au col (3) correspondant en recouvrant au moins en partie le palier associé et porte une couronne périphérique externe (12) coopérant avec l'actionneur (A1, A2) correspondant.

5. Système selon l'une des revendications 1 à 4,
**caractérisé en ce que** chaque actionneur (A1, A2) est du type à vis sans fin.

## Claims

1. System of nozzles for controlling the trajectory of a moving body (M) driven by redaction and having a longitudinal axis (L) at the intersection of the horizontal median longitudinal plane (H) and the vertical median longitudinal plane (V) of said moving body, system in which:
- each of said nozzles includes a throat (3) extended by a divergent portion (4), the throat of each nozzle having an axis (ℓ) of the throat parallel to said longitudinal axis of the moving body and mounted for rotation, relative to said moving body, around said axis of the throat, whilst the divergent portion (4) of each nozzle has an axis (p) of the divergent portion inclined with a fixed preset angle (α) relative to said corresponding axis of the throat, the axis of the throat and the axis of the divergent portion of one nozzle forming a symmetry plane for this latter;
- with each nozzle is associated an actuator to be able to rotate said nozzle around the corresponding axis of the throat; and
- means (14) are provided for monitoring the orientation of said nozzles under the action of said actuators,
**characterized in that:**
- said system includes a single pair of nozzles (N 1, N2) diametrically opposed relative to said longitudinal axis (L) of the moving body (M), the axis (ℓ) of the throats of both nozzles being arranged in said horizontal median longitudinal plane (H) of the moving body;
- when said moving body is in cruise, said horizontal median longitudinal plane (H) is arranged horizontally and the symmetry planes (S1, S2) of both nozzles (N1, N2) are merged with said horizontal median longitudinal plane (H), the nozzles being directed in opposite directions; and,
- from this cruise configuration, a deviation of said missile in a direction (T) transversal to said longitudinal axis (L) is obtained:
. by a previous rotation in roll, around said longitudinal axis (L), bringing said horizontal median longitudinal plane (H) of the moving body (M) in a position at least approximately orthogonal to said transversal direction (T), then
. by a deflection resulting from a symmetrical orientation of the symmetry planes (S1, S2) of both nozzles relative to said vertical median longitudinal plane (V) of said moving body (M), said nozzles being directed in common in the opposite direction to said deviation.

2. System according to claim 1,
**characterized in that,** in said deflection following the rotation in roll, the symmetry planes (S1, S2) of both nozzles are parallel to said moving body.

3. System according to one of claims 1 or 2,
**characterized in that** the throat (3) of each nozzle (N 1, N2) includes a transversal ring protruding peripherally (5) and is mounted in a bearing (B1, B2), which is integral with said moving body (M) and comprises rolling means (6, 7) pressing said ring (5) between them.

4. System according to one of claims 1 to 3,
**characterized in that** the divergent portion (4) of each nozzle (N 1, N2) is added to the corresponding throat (3) recovering at least partially the associated bearing and carries an external peripheral crown (12) cooperating with the corresponding actuator (A1, A2).

5. System according to one of claims 1 to 4,
**characterized in that** each actuator (A1, A2) is of the type worn screw.

## Patentansprüche

1. Düsensystem zur Kontrolle der Bahn eines beweglichen Objekts (M), das durch Rückstoß angetrieben wird und eine Längsachse (L) am Durchschnitt der horizontalen Längsmittelebene (H) und der vertikalen Längsmittelebene (V) des beweglichen Objekts aufweist, wobei in diesem System:
- jede der Düsen einen Hals (3) umfasst, der durch einen auseinanderlaufenden Trichter (4) verlängert wird, wobei der Hals jeder Düse eine Halsachse (t) aufweist, die parallel zur Längsachse des beweglichen Objekts ist, und in Bezug auf das bewegliche Objekt drehbar um die Halsachse montiert ist, während der Trichter (4) jeder Düse eine Trichterachse (p) aufweist, die in einem vorbestimmten fixen Winkel (α) in Bezug auf die entsprechende Halsachse geneigt ist, wobei die Halsachse und die Trichterachse einer Düse eine Symmetrieebene für diese bilden;
- jeder Düse eine Betätigungsvorrichtung zugeordnet ist, die geeignet ist, die Düse um die entsprechende Halsachse zu drehen; und
- Mittel (14) vorgesehen sind, um die Ausrichtung der Düsen unter der Einwirkung der Betätigungsvorrichtungen zu steuern,
**dadurch gekennzeichnet, dass**
- das System ein einziges Paar Düsen (N1, N2) umfasst, die in Bezug auf die Längsachse (L) des beweglichen Objekts (M) diametral entgegengesetzt angeordnet sind, wobei die Achsen (ℓ) der Hälse der beiden Düsen in der horizontalen Längsmittelebene (H) des beweglichen Objekts angeordnet sind;
- wenn sich das bewegliche Objekt im Reiseflug befindet, die horizontale Längsmittelebene (H) horizontal angeordnet ist und die Symmetrieebenen (S1, S2) der beiden Düsen (N1, N2) mit der horizontalen Längsmittelebene (H) zusammenfallen, wobei die Düsen in entgegengesetzte Richtungen gerichtet sind; und
- ausgehend von, dieser Reiseflug-Konfiguration eine Abweichung des Flugkörpers in eine Richtung (T) quer zur Längsachse (L) erzielt wird, und zwar durch:
• eine vorherige Rollbewegung um die Längsachse (L), die die horizontale Längsmittelebene (H) des beweglichen Objekts (M) in eine Position bringt, die mindestens annähernd rechtwinklig zur Querrichtung (T) ist, und anschließend
• eine Ablenkung, resultierend aus einer symmetrischen Ausrichtung der Symmetrieebenen (S1, S2) der beiden Düsen in Bezug auf die vertikale Längsmittelebene (V) des beweglichen Objekts (M), wobei die Düsen gemeinsam in die Richtung ausgerichtet sind, die der Ablenkung entgegengesetzt ist.

2. System nach Anspruch 1,
**dadurch gekennzeichnet, dass** bei der Ablenkung nach der Rollbewegung die Symmetrieebenen (S1, S2) der beiden Düsen parallel zur vertikalen Längsmittelebene (V) des beweglichen Objekts sind.

3. System nach einem der Ansprüche 1 oder 2,
**dadurch gekennzeichnet, dass** der Hals (3) jeder Düse (N1, N2) einen quer verlaufenden, in Umfangsrichtung vorspringenden Ring (5) umfasst und in einem Lager (B1, B2) montiert ist, das mit dem beweglichen Objekt (M) fest verbunden ist und Wälzmittel (6, 7) umfasst, die den Ring (5) zwischen ihnen drücken.

4. System nach einem der Ansprüche 1 bis 3,
**dadurch gekennzeichnet, dass** der Trichter (4) jeder Düse (N1, N2) an den entsprechenden Hals (3) angesetzt ist, wobei er das dazugehörige Lager mindestens teilweise bedeckt, und dass er einen äußeren in Umfangsrichtung verlaufenden Kranz (12) umfasst, der mit der entsprechenden Betätigungsvorrichtung (A1, A2) zusammenarbeitet.

5. System nach einem der Ansprüche 1 bis 4,
**dadurch gekennzeichnet, dass** jede Betätigungsvorrichtung (A1, A2) vom Typ Schraube ohne Ende ist.
